# EUROPEAN PATENT APPLICATION

(11) **EP 3 936 240 A1**
(43) Date of publication of application: **12.01.2022**
(21) Application number: 21181977.6
(22) Date of filing: 28.06.2021
(51) Int. Cl.: B08B 1/02, B08B 3/02, B08B 9/08, B08B 9/093, B08B 9/20, B65G 21/20

(54) **CHAIN CONVEYOR WITH STOP PINS FOR CRATE WASHING LINES**

(30) Priority: 08.07.2020 CZ 20200398
(71) Applicant: Well Pack s.r.o., 10100 Praha 10 (CZ)
(72) Inventor: Srp, David, 28912 T ebestovice (CZ); Kalina, Luká, 66902 Dyjákovi ky (CZ)
(74) Representative: Sedlák, Jirí

(57) **Abstract**

The chain conveyor (1) with stop pins (2) for washing lines (0) of crates (3) is characterized in that it comprises at least one chain (4) fitted with stop pins (2), wherein the height kv of the stop pins (2) ranges *t* - *50 mm* - *pₚ < kᵥ < t - pₚ,* where *t* is the height of the working wash zone and *pₚ* is the thickness of the base of the crate (3), wherein the height of the working zone is defined as the shortest distance from the upper edge of the chain (4) of the chain conveyor (1) to the horizontal plane passing through the lower edge of the upper stop (5) of the washing line (0).

## Description

### Field of Technology

### Crate washing lines

### State of the Art

Important parameters for washing lines are the quality of washing and smoothness of operation. Both parameters to a large extent depend on the settings of the washing line, but are also largely influenced by the parameters and dimensions of the line itself. Shaping the wash zone of the line is important when washing crates or boxes of various shapes and sizes. As a rule, the wash zone of the line is dimensioned for the largest crates which are guided through the washing line by means of guide rails onto which they fit closely at small distances from each other. When smaller crates are washed that do not fit closely onto the guide rails of the washing line, unpredictable movements of the crates inside the wash zone occur, and often the smaller crates are jammed inside the wash zone of the line.

At present, the washing lines for crates or boxes are realized using several methods. One method consists in carrying the crates by means of pins, wherein the pins are located on three chains extending longitudinally through the entire washing line, which carry the crates or boxes and pull them through the entire washing line. Thus, the crates are pulled in the direction of travel but they are not fixed in the washing line from the sides or from above. Pressurized water often tosses the crate sideways and up/down in the wash zone of the line, wherein it depends on the height of the wash zone or wash zone bounded by the guide rails, height of the crate and height of the guide pin, whether the crate is still pulled through the washing line by the pin or whether it can slip from the pin when lifted by pressurized water and jam in the wash zone of the line. Washing lines realized in this way are highly liable to failure and the operation of such washing line must be under constant supervision.

Another method of realization of washing lines consists in the guiding the crates through the washing line by means of flexible segments according to CZ 308395 registered by Well Pack. This method for fixing the crates has proved to be functional, however very complex in terms of design. Water from washing entered the inner space of the flexible segments and the flexible segments provided only a limited service life, as they got stuck due to the water. Because of the plurality of flexible segments in a single washing line, the replacement of malfunctioning segments was a very problematic issue. The flexible segments could be said to be a slightly overcomplicated dead-end, where the fixing for different crate heights was solved individually and the issue was viewed without perspective.

Factors influencing technological failures:
- Different height in a row of consecutive crates affects the nozzle pressures applied on individual crates
- Different nozzle pressures from different angles on a large crate with different crate height when passing through the washing line
- Different nozzle pressures from different angles on a small crate with different crate height when passing through the washing line The factor is multiplied by the fact that small crates move in different distance from the nozzles - in the middle or along either side of the track. Thereby a different water pressure hits it from different sides at different angles, which in turn makes twisting of the crate and its jamming in the track easier.
- Crates are collapsible - when crates jump off the pins and are under water pressure from the side nozzles, that is on the shorter side of the crate, they collapse into the base platform and get jammed on the frame, wall of the washer, they are twisted or turn over by the water pressure, causing a technological failure.
- The crate has no possibility of being firmly fixed all the way through the washing line and it is not possible to wash each individual crate efficiently under high pressure.
- At higher speeds, it is not possible to efficiently wash the long side of the crate only by passing under the nozzle so that the water pressure disrupts the paper label.
- At higher speeds, water usually hits the long side of the crate only by reflection, due to the high speed of the crate being carried and the fact that height of the crates changes when the low one runs immediately behind the high one, i.e. the high crate causes an umbrella effect for the low crate.
- With different crate heights, it is not possible to efficiently wash the long side of the crate by passing only (at certain angles, the nozzle does not cover the entire crate wall with its angle, crate speed and pressure to ensure the most effective removal of the label from the long side of the crate).
- Washing crates from underneath - it is almost impossible to wash them under higher pressure; due to pressure the crates are lifted up and turn over or jump off the trailing pins and the crate collapses or gets jammed on the washer installation. Crates cause a problem mainly where the contact surfaces of the crate pass through the stream from the nozzle.
- Low washing efficiency of the standard **Main Wash section at pressure of 6 bar**

If all crate heights are in production, all crates that are smaller than the free inner space of the washing line are lifted up and levitated or tipped over due to water pressure. These are generally crates lower than 220 mm due to the height of the pin above the chain, usually 80 mm, and the entire free wash zone, which is usually 300 mm high.
- Maximum height to the upper stop of the crates (space from the chain to the upper stop is usually 300 mm)
- 300 - 80 = 220 mm, i.e. crates of heights 221 mm to 300 mm will be fixed, while other crates become unstable under the water pressure; the crate slides off the pin and begins to destabilize the entire system.

The standard washing process is carried out in such a way that the crate is conveyed into the washer upside down by the input conveyor. From the inside, the crate is caught in the washer by the pins of guide chains or conveyor. The pins on the washer chain ensure that the crate does not collapse when passing through the washer, even if the crate is not closed in the locks. When passing through the washer, the crate is sprayed with water, which is distributed by means of pumps and the nozzle system. The frame inside the washer, in which several sets of nozzles are installed one above the other or next to each other and mostly with added detergent/disinfection, is divided into the Pre-wash, Main wash, Disinfection Rinse and Clean Water Rinse sections. These nozzle sections are fixed in the washer, wherein the nozzle system exerts pressure of 3, 6 or up to 20 bar on the crate or certain point on the crate from different sides and angles from above, from below and from both sides along the washer guide so that the crate can be washed without lifting, tipping over, collapsing or rotating in the washer. Furthermore, even when small crate is passing through, the nozzles are on one or both sides more or less distant from the crate, i.e. acting again on the crate or certain point on the crate by different pressures.

After washing and rinsing with clean water, the crate is taken out from the washer onto the outlet conveyor.

Each crate guiding line includes two to three guide chains, depending on whether the washer washes small crates of 400 * 300 mm or large crates of 600 * 400 mm. The chains are constantly in motion and, thus, they are subject to wear. As a rule, the chains are necessary to be replaced once a year, so it is important whether there are two or three chains within the washing line, as the number of chains increases the cost for chain replacement.

If the washer washes small type of crates, a side pull-out guide is added next to the chain along the entire length thereof, which rises about 50 mm above the chain level when washing small crates to form a side plate to prevent small crates from slipping off the line and causing jamming-clogging the washer or breaking the chain.

In the case of washing large crates, this side plate is fixed on both sides, stationary, installed 50 mm above the level of the washer chain.

In the washer inner space, there is an adjustable guide suspended against the chain on the ceiling of the wash zone along the entire length of the washer to ensure the stability of crates so that the crates do not jump off the chain.

### Length of a standard washer used for this calculation is 18.6 m.

Standard washer speed is 0.3 m/s = 1800 crates/hour; label washing efficiency is around 30%. The high-pressure module washer speed is 0.85 m/s = 2600 crates/hour; label washing efficiency is around 50%.

Labels are attached to the shorter side of the crates. This side must therefore be subjected to the most powerful and efficient washing.

As a standard, large crates with a plan size of 600 * 400 mm and height from 20 to 300 mm, small crates with a plan size of 400 * 300 mm and height from 20 to 300 mm are washed. However, smaller crates are no exception, for example for the automotive industry, where small parts are stored in tiny crates. The automotive crates are not only non-standardly small but in addition to being covered with labels, they are also dirty with oils and lubricants, increasing the requirements for washing them.

### Flow rates:

| | |
|---|---|
| Standard washer | flow rate 95 m³/h = 251/s |
| Washer with high-pressure module | flow rate 15 m³/h = 41/s |

### Nozzles for the main wash section

| | |
|---|---|
| Standard washer | flow rate 95 m³/h = 6 nozzles on each side |
| Washer with high-pressure module | flow rate 15 m³/h = 5 nozzles on each side |

### Existing fixation of crates

The crate can be fixed from above to prevent it from jumping off the pin, but only when washing one single predetermined crate height and/or fixing only the highest crate of a row of consecutive crates of different heights, typically crates of 300mm height. Crates smaller than the difference between the maximum space for the crate from the chain/ conveyor to the upper stop and the pin height (here 300 mm - 80 mm = 220 mm) are lifted or tipped over by the water pressure. When the crate levitates above the pin due to the water pressure, the water pressure from the side locks it and the crate falls back, gets stuck, or breaks the chain.

Existing crate washers, except for washers equipped with flexible segments according to CZ 308395, cannot fix any lower crates than the set maximum height, wherein the highest crates are fixed with rigid guide rails and the lower crates are not fixed from above at all.

Unwanted movements and change of crate positions and jamming thereof in the wash zone occur mainly in the main wash section, when the crates are subjected to high water pressures, which cause their movement. A crate jam in the wash zone will put the washing line out of operation for the time required to remove the jammed crate. At a throughput of 2,600 crates per hour and a downtime of 10 minutes, 433 crates will be delayed and approximately 130 Euros will be lost.

### Description of the Invention

**The problem of effective and simple fixation of crates of different sizes in the washing line has been solved by moving away from classical established technical models, where crates are guided along wires, rails, fixators and stops, and a brilliantly simple system has been created, where the crates are actually hung on the stop pins upside-down, where the crates hang on the stop pins and, therefore, they can be unhinged the stop pins just below the ceiling of the wash zone and, thus, the crates cannot jump out or get blocked on the transport path through the washing line under any circumstances.**
**The stop pins have preferably adjustable chain spacing for the crate washing lines. The chain conveyor with stop pins has at least one chain equipped with stop pins with a height ranging from *t* - *50 mm* - *pₚ < k_{V} < t - pₚ,* wherein *t* is the height of the working wash zone and *pₚ* is the thickness of the crate base, wherein the height of the working area is defined as a distance from the upper edge of the chain of the chain conveyor to the lower edge of the upper stop of the washing line.**

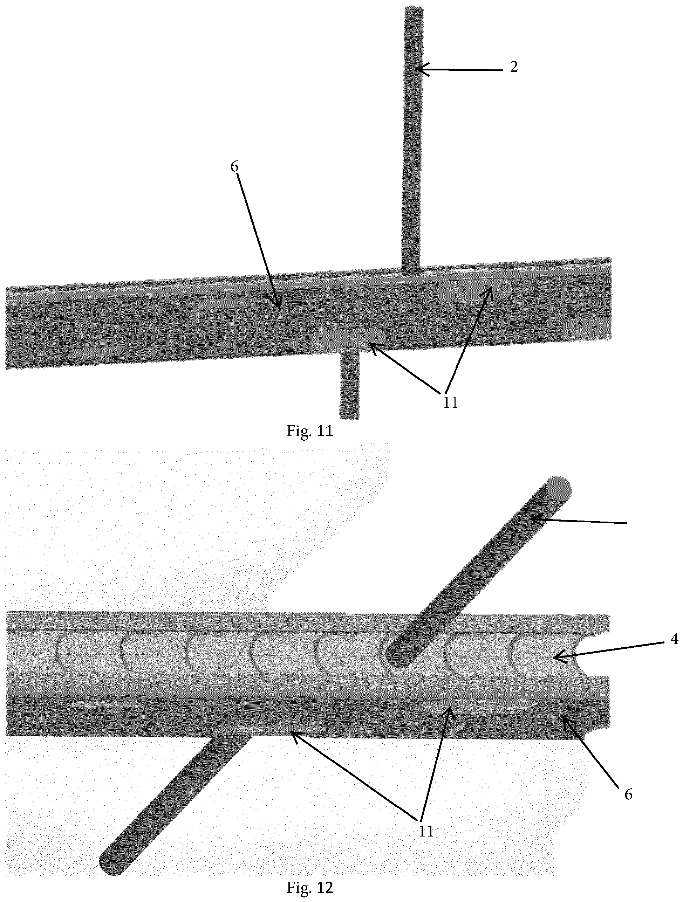

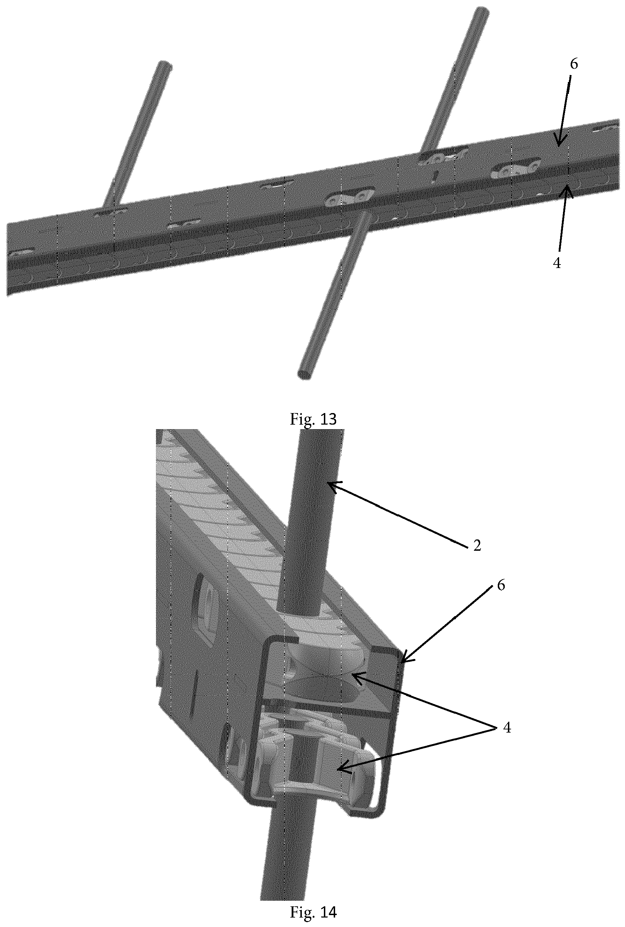

The chain equipped with the stop pins is preferably located in a fixator, more preferably in rails, wherein the rails have a C-shaped cross-section to prevent the pins from tilting sideways or the chain from deflecting. Preferably, the fixator has a double C-profile shape, whereby the chain runs along both upper and lower sides thereof - Figure 11, 12, 13 and 14.

Preferably, the chain conveyor comprises two parallel chains mounted in fixators. Then, the stop pins on the chains are always placed opposite each other, in one axis perpendicular to the conveyor travel axis. The stop pins ensure that both deep and shallow crates are conveyed just below the upper stop of the wash zone, placed on top of the stop pins and fixed from above by a fixed stop that is usually part of every washing line. This guarantees the versatility of the washing line for all possible crate depths, wherein the only limitation is the height of the working wash zone of the line. The stability of the crate positioned just below the upper stop of the wash zone is demonstrated by the fact that a single chain fitted with stop pins is sufficient to guide the crate. The crate cannot slide off the pin as it has no way to swing upwards - the upper stop holds the crate there. The crate guided by the single chain may move freely only to the sides, so in this case, the crate is necessary to fix from the sides in a different way, for example by side stops.

However, it is preferable to use two chains with adjustable widths, so that not only crates of different depths but also of different widths can be washed. The width adjustability of the conveyor completely eliminates the need for a third chain guide, resulting in considerable savings. As a rule, one chain in the conveyor rail is placed in the wash zone fixedly and the other chain in the rail is placed on the sliding axis perpendicular to the conveyor travel axis. That is one rail stands and the second rail approaches or moves away from the first one, depending on the particular setup. In another embodiment, the two rails are placed on the sliding axis and approach or move away from each other. Preferably, the rail sliding is provided by a motor and a Cardan gearbox that moves one or both rails along the sliding axis. In another embodiment, the rail sliding is provided by a piston or carried out manually.
The conveyor width cannot be adjusted for each crate, however, the setting is changed for each batch of crates being washed. The conveyor width is set so that the distance of the outer edges of the pins is less than the inner width of the crate to be washed and, at the same time, greater than ½ of the inner width of the crate to be washed, i.e. ½*p_{S} < d* < *p_{S}*, where *p_{S}* is the inner width of the crate, wherein the distance *d* of the chains is defined as the distance of the outer edges of the stop pins. In this way, the fixation of crates of different widths is guaranteed.

One crate is preferably guided by at least two pins. Since the crate bottom of any size always sits on the upper guide skids of the wash zone, the crate has nowhere to jump off. Preferably, however, one crate is guided by at least four pins. The pins are mounted on the chain at a variable spacing between each other, however, always at a constant spacing. Each chain link is possible to be fitted with one pin, thus ensuring the minimum possible pin spacing and allowing to wash small crates having an internal size corresponding to the pin spacing on one chain. Alternatively, the chain is possible to be fitted with pins at every other link, at every third link, at every fourth link, etc. For washing lines where only large crates are washed, it is unnecessary to fit pins in every link of the chain. Preferably, the pins are fitted on the chain at a distance less than the inner length of the crate and greater than ½ of the inner length of the crate, i.e. ½*p_{D} < k_{D} < p_{D},* where *p_{D}* is the inner length of the crate and *k_{D}* is the distance of the pins on one conveyor chain.

As already mentioned, the conveyor chain is preferably placed in a C-shaped rail, which fixes the chain against tilting. The inner dimensions of the rail preferably correspond to the outer dimensions of the chain + the distance gap necessary for the chain to slip in the rail. The rail is placed longitudinally in the wash zone of the washing line and ends together with the end of the washing line. Preferably, the rail has a rounded end and beginning, so as not to scrape the passing chain, which turns under the conveyor at the end of the rail, or at the end of the washing line, and, in a loop, returns through the tensioner to the beginning of the washing line, or to the beginning of the rail. The upper wall of the rail has an opening along the entire length thereof corresponding to the C-shaped opening, through which the stop pins pass. Preferably, the rail has openings in the side walls thereof located opposite each other, the dimensions of which are larger than the dimensions of one chain link. These openings are preferably located no more than 20 cm apart and are used for easy maintenance or repair of the chain, for example a broken chain link. Due to the openings in the side wall of the rail, it is not necessary to remove the whole chain, which often weighs around 60 to 100 kg, from the washing line. The individual chain links are usually connected by pins, and so the damaged chain link is unpinned, pulled out, replaced with a new one and pinned again through the opening in the side wall of the rail. This saves not only the time needed to repair the chain but also the work of the repairmen, as a 100kg chain has to be repaired by at least two persons.

The conveyor chain is placed in a loop as standard, wherein each loop of the conveyor chain has its own tensioner. The tensioner is a standard accessory of every chain conveyor, which ensures the tensioning of the chain and proper function thereof. For example, the chain tensioner can be a spring or piston chain tensioner and this is usually a wheel or wheel section on which the conveyor chain is placed, wherein the spring or piston pushes the wheel with the placed chain away from the conveyor plane, usually under the conveyor, thereby tensioning the chain.

The washing line equipped with a conveyor with stop pins preferably has a loading ramp, which is located at the beginning of the conveyor. The loading ramp preferably has a horizontal surface and slopes down in the direction of the conveyor travel. The ramp is preferably equipped with a belt conveyor. The crate is placed on the horizontal surface of the loading ramp, upside down, over the top of the pins. The crate is moved by the belt conveyor along the horizontal surface of the ramp and passes to the sloping surface of the ramp. The crate is moved by its own weight or by the belt conveyor along the sloping surface of the ramp, where a pin conveyor passes that picks up the crate and carries it further through the wash zone of the washing line. Preferably, the upper stops of the wash zone of the washing line are already located at the sloping surface of the loading ramp, when the crate moving on the loading ramp goes under the upper stop and has nowhere to jump off. At the point where the loading ramp ends, it is preferable if the upper stop is located parallel to the chain conveyor, as together they define the working wash zone of the washing line, from which the dimensions of the entire conveyor are derived.

Preferably, the chain conveyor with stop pins is located in the washing line having a swivel roof. The upper stops are then conveniently mounted on the swivel roof of the washing line, so that when a crate is jammed, the washing line is simply opened from the top and the jammed crate is simply removed. The openable roof also makes servicing easier.

Conveyor chain, conveyor pins and conveyor rails made of durable materials, preferably nylon or stainless steel. The combination where the conveyor pins are made of nylon and the rail is made of stainless steel is particularly preferable. Such a combination achieves the optimum characteristics of the pin conveyor when:
- The pins are hard enough to transport the crates, and, at the same time, the pins are flexible enough. In the case of an abnormal situation - for example, a chain breaking or a crate jam due to incorrect conveyor width adjustment, the pin can be easily bent and the crate is released. At the same time, the pins have sufficient shape memory to quickly return to the original shape thereof, usually within a few seconds.
- The rail is strong enough to fix the chain and, at the same time, if polished steel is used, the rail slides well in the presence of water for smooth chain movement.

If 400*600 mm crates, 300*400 mm crates, and 300*200 mm crates are necessary to be washed. The crate depths are 60 mm, 300 mm, and 150 mm. The conveyor width was set at 280 mm from the outer edge of the left pin to the outer edge of the right pin. The pins were 150 mm apart from each other on the chain. The height of the pins was 280 mm, the height of the wash zone was 310 mm. The crates were loaded upside down onto the conveyor from the loading ramp having the belt conveyor. The crates were moved along the loading ramp over the tops of the conveyor pins. The moment the crates reached the sloping surface of the ramp, they were picked up by two stop pins of the chain conveyor, which pressed the crates with the bottom against the upper stop of the wash zone and carried the fixed crates through the wash zone. Water nozzle pressures ranging from 10 to 250 bar and conveyor travel rates ranging from 500 to 3,200 crates of 400*600 mm per hour were tested. It turned out that even during the high-pressure operation of 250 Bar and 3,200 crates per hour, no crates were jammed during operation and the crates were washed better than in the existing washing lines despite the achieved washing speed. High-pressure nozzles could be applied to the crates from all sides and angles without disturbing the stability and fixation of the crates. Washing efficiency reached up to 90%, depending on the high-pressure nozzle direction settings.
The crate fixing system with stop pins has been tested to work at 100%. The breakdowns of the washing line occurred in the testing mode were never caused by the pin conveyor, but most often by the following circumstances:
- A damaged crate comes into the system - most often with a broken side wall. A crate with an open lock is not detrimental to the operation of the conveyor, it is able to hold the crate in the unfolded state thereof even with the lock open the conveyor due to the pressure of the pins acting on the front sidewall of the crate.
- The crate comes into the system bottom down.
- There is chain breakage or shifting of one chain relative to the other caused by insufficient chain tension. As soon as the pins of both chains are not positioned in one axis perpendicular to the conveyor travel axis, the crates are guided diagonally and insufficiently fixed.

### A summary:

The chain conveyor with stop pins for crate washing lines includes at least one chain equipped with stop pins, wherein the stop pin height kv ranges from - 50 mm - pₚ < k_{V} < t - pₚ, where t is the height of the working wash zone and pₚ is the thickness of the crate base, wherein the height of the working area is defined as the shortest distance from the upper edge of the chain of the chain conveyor to the lower edge of the upper stop of the washing line.

Preferably, the chain is seated in a fixator having a C-rail shape, wherein the chain is seated in the fixator body and the stop pins pass through the upper wall of the fixator.
Preferably, the fixator has openings in the side walls thereof for handling the chain.

Preferably, the chain conveyor comprises two parallel chains.
Preferably, the distance d of the chains is adjustable within the range ½p_{S} < d < p_{S}, where p_{S} is the inner width of the crate, wherein the distance d of the chains of the chain conveyor is defined as the distance of the outer edges of the stop pins.

Preferably, the distance k_{D} of adjacent stop pins seated on a single chain is in the range ½p_{D} < k_{D} < p_{D}, where p_{D} is the inner length of the crate.

Preferably, the chain-positioning fixators are connected to each other by a sliding axis perpendicular to the travel axis of the chain conveyor, wherein the sliding axis is connected to the at least one fixator by a sliding joint and preferably has a Cardan gearbox.
Preferably, the sliding axis is connected to the positioning system and the fixing system, which is implemented by a horizontal drive, which may be mechanical, pneumatic, hydraulic, or electromechanical.
Preferably, both the positioning system and the fixing system are implemented by a hollow cylinder with an embedded piston or motor.
Preferably, the chain and stop pins are made of stainless steel and/or nylon.

### Summary of presented drawings

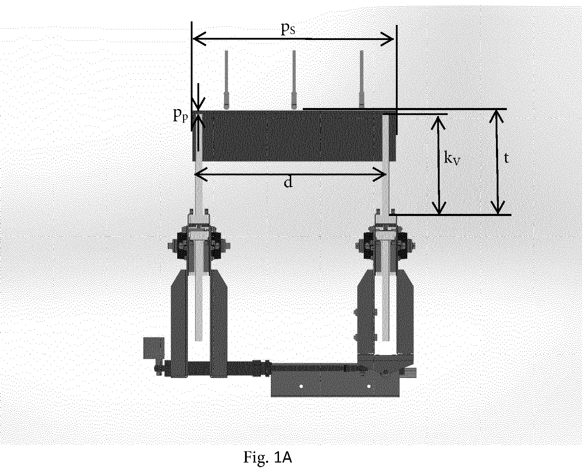

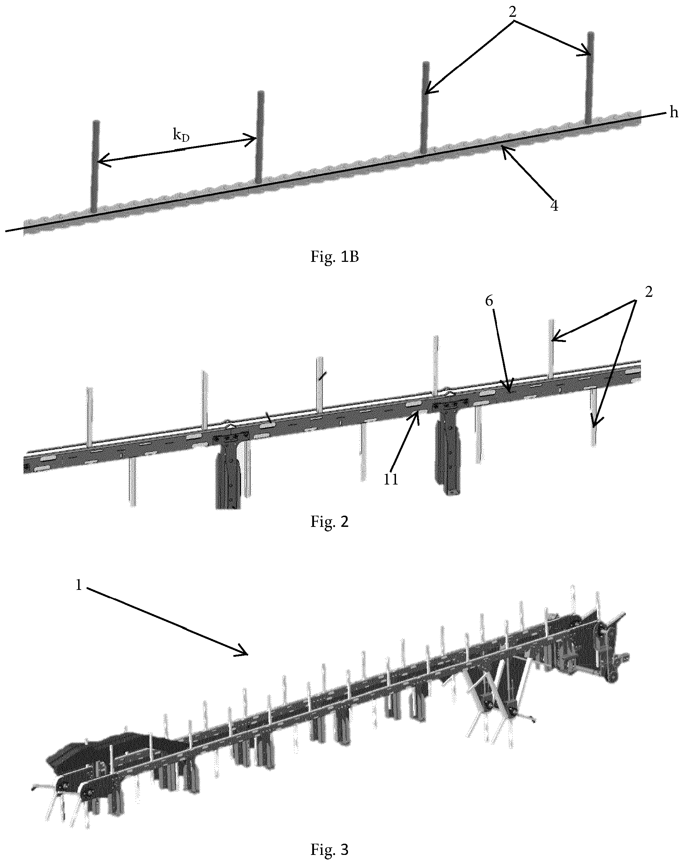

- Fig. 1:: A: Dimensioning of the chain conveyor fitted with stop pins within the working wash zone of the washing line B: Chain of the chain conveyor fitted with stop pins
- Fig. 2:: Chain of the chain conveyor fitted with stop pins mounted in a fixator
- Fig. 3:: Chain conveyor with stop pins having two parallel chains mounted in a fixator and a loading ramp

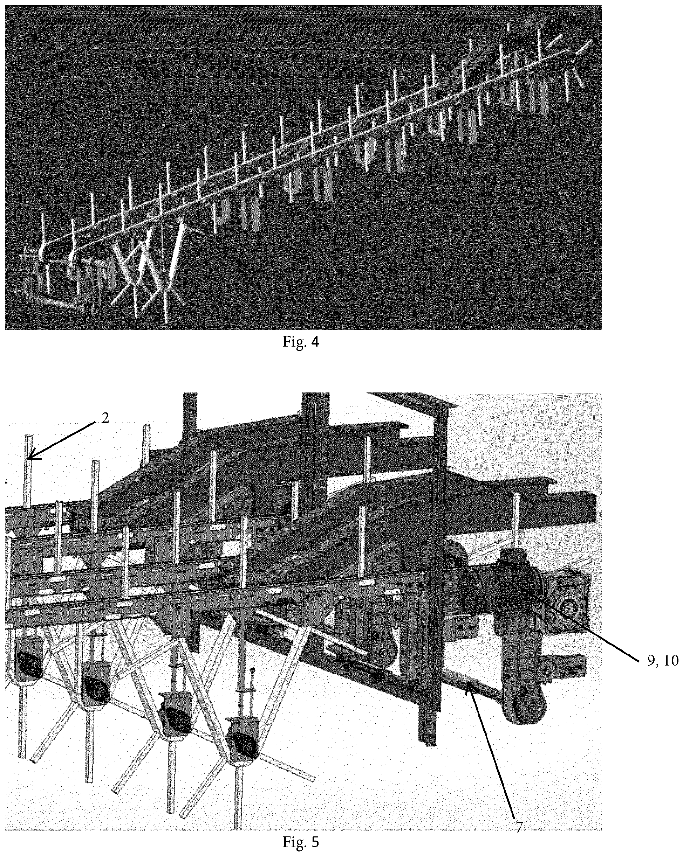

- Fig. 4:: Chain conveyor with stop pins having two parallel chains mounted in a fixator and a loading ramp
- Fig. 5:: Two chain conveyors with stop pins having two parallel chains mounted in a fixator, and a loading ramp, placed side by side

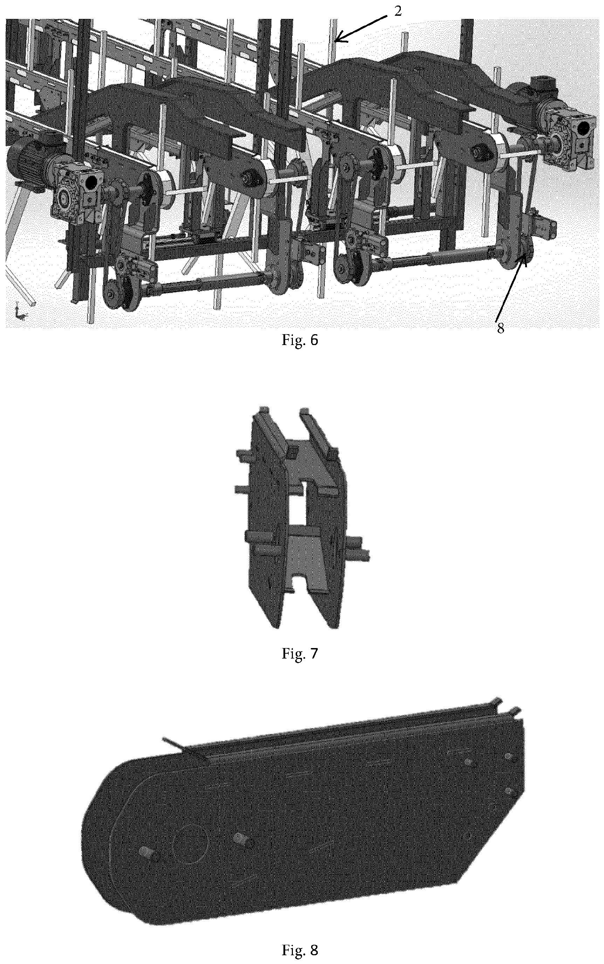

- Fig. 6:: Two chain conveyors with stop pins having two parallel chains mounted in a fixator, and a loading ramp, placed side by side
- Fig. 7:: Sliding lug for connection of fixator and connecting axis, front view
- Fig. 8:: Sliding lug for connection of fixator and connecting axis, rear view

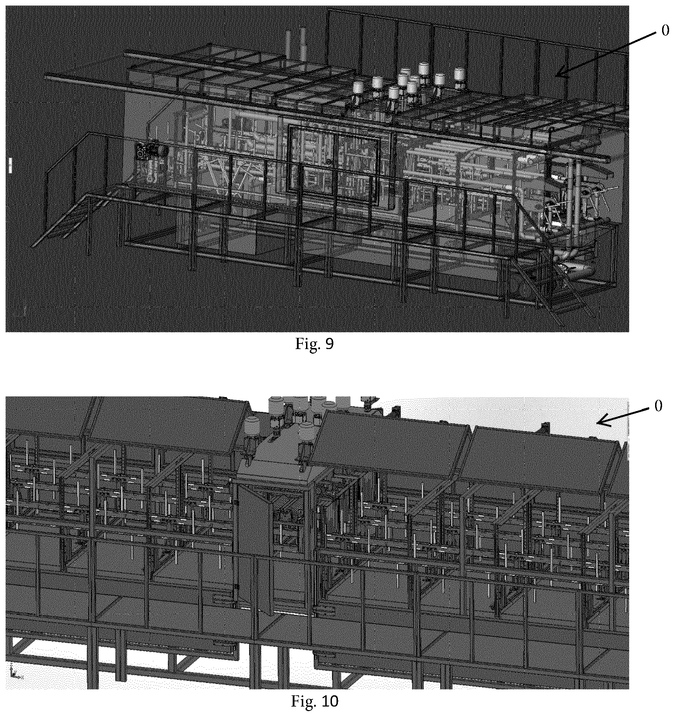

- Fig. 9:: Washing line equipped with two chain conveyors with stop pins
- Fig. 10:: Washing line equipped with two chain conveyors with stop pins
- Fig. 11:: Chain of the chain conveyor fitted with stop pins mounted in a fixator, side view
- Fig. 12:: Chain of the chain conveyor fitted with stop pins mounted in a fixator, top view
- Fig. 13:: Chain of the chain conveyor fitted with stop pins mounted in a fixator, view from below
- Fig. 14:: Chain of the chain conveyor fitted with stop pins mounted in a fixator, cross-sectional view

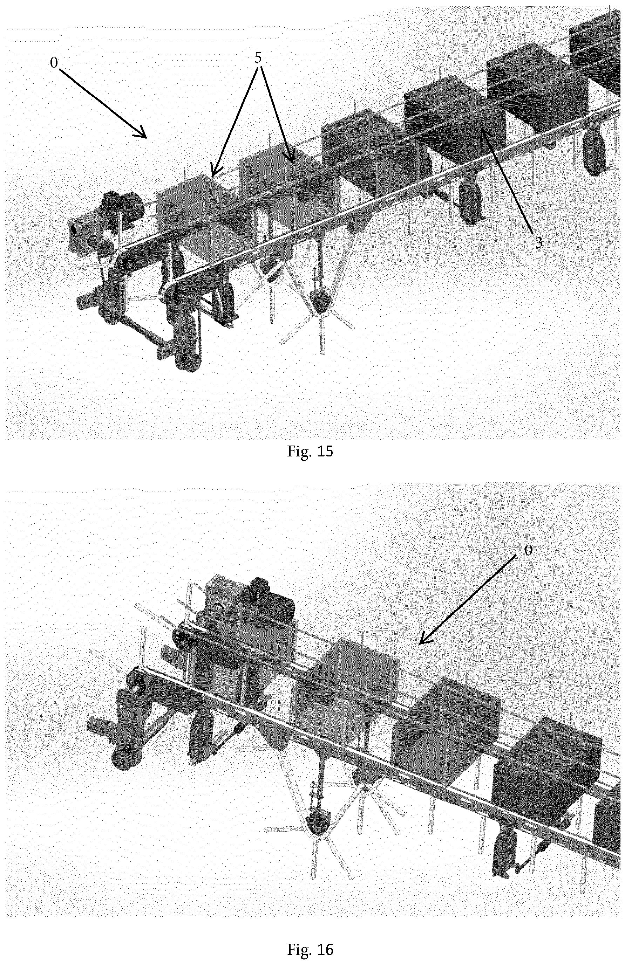

- Fig. 15:: Chain conveyor with stop pins having two parallel chains mounted in a fixator, fitted with large 600*400mm crates, side view
- Fig. 16:: Chain conveyor with stop pins having two parallel chains mounted in a fixator, fitted with large 600*400mm crates, side view

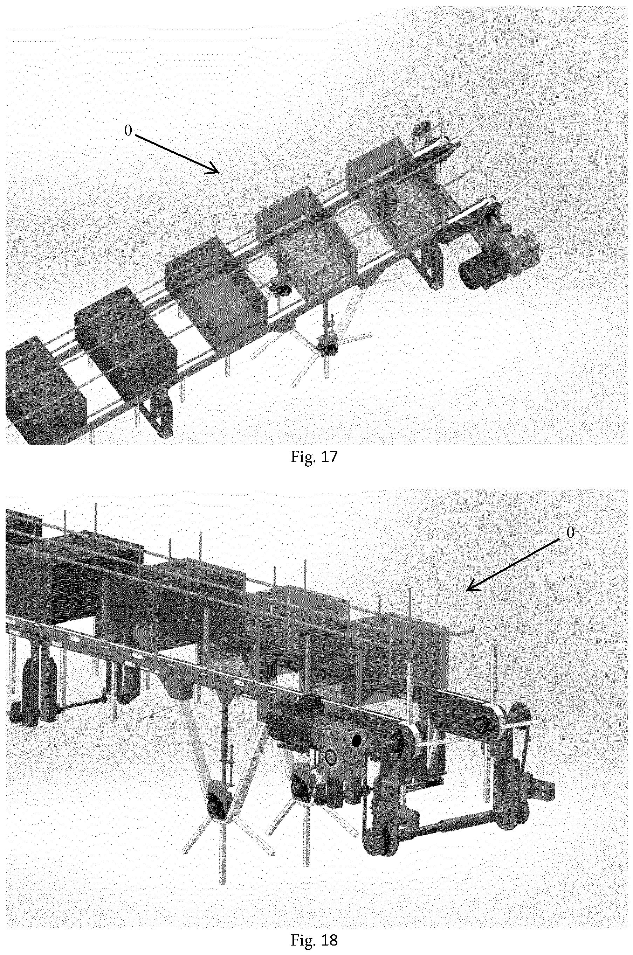

- Fig. 17:: Chain conveyor with stop pins having two parallel chains mounted in a fixator, fitted with large 600*400mm crates, top view
- Fig. 18:: Chain conveyor with stop pins having two parallel chains mounted in a fixator, fitted with large 600*400mm crates, side view

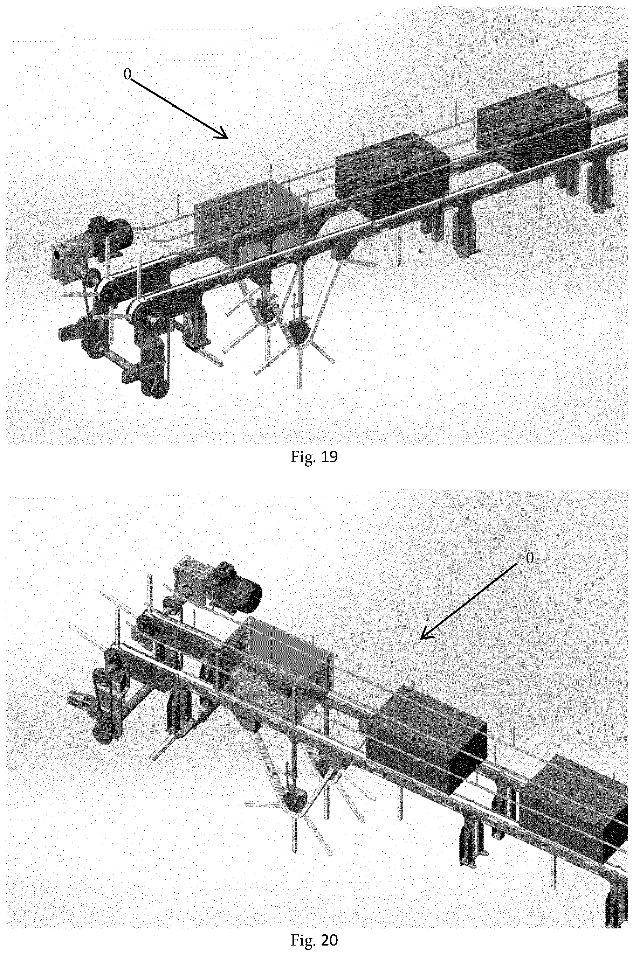

- Fig. 19:: Chain conveyor with stop pins having two parallel chains mounted in a fixator, fitted with small 300*400mm crates, side view
- Fig. 20:: Chain conveyor with stop pins having two parallel chains mounted in a fixator, fitted with small 300*400mm crates, top view

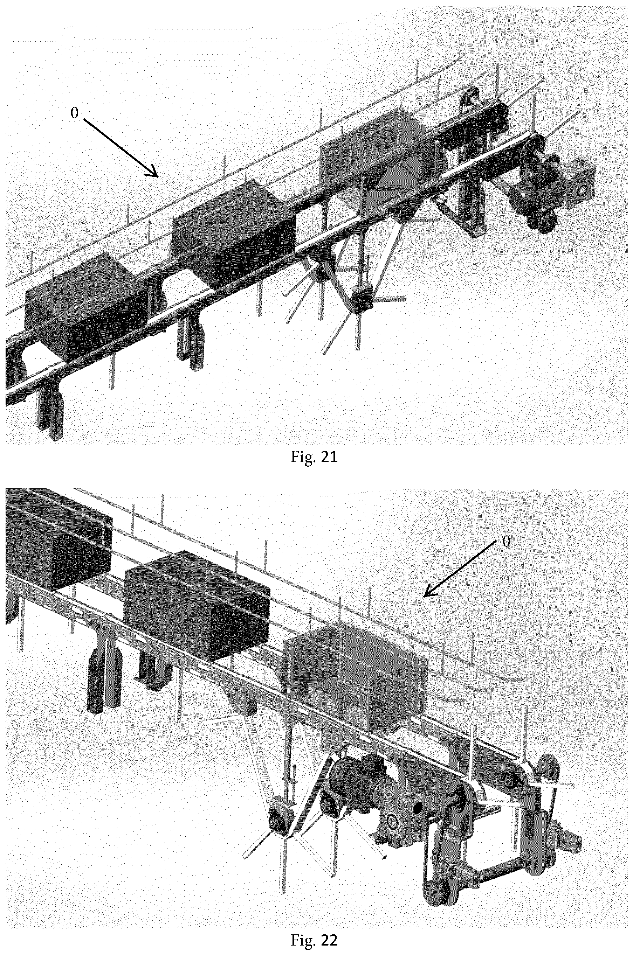

- Fig. 21:: Chain conveyor with stop pins having two parallel chains mounted in a fixator, fitted with small 300*400mm crates, side view
- Fig. 22:: Chain conveyor with stop pins having two parallel chains mounted in a fixator, fitted with small 300*400mm crates, side view

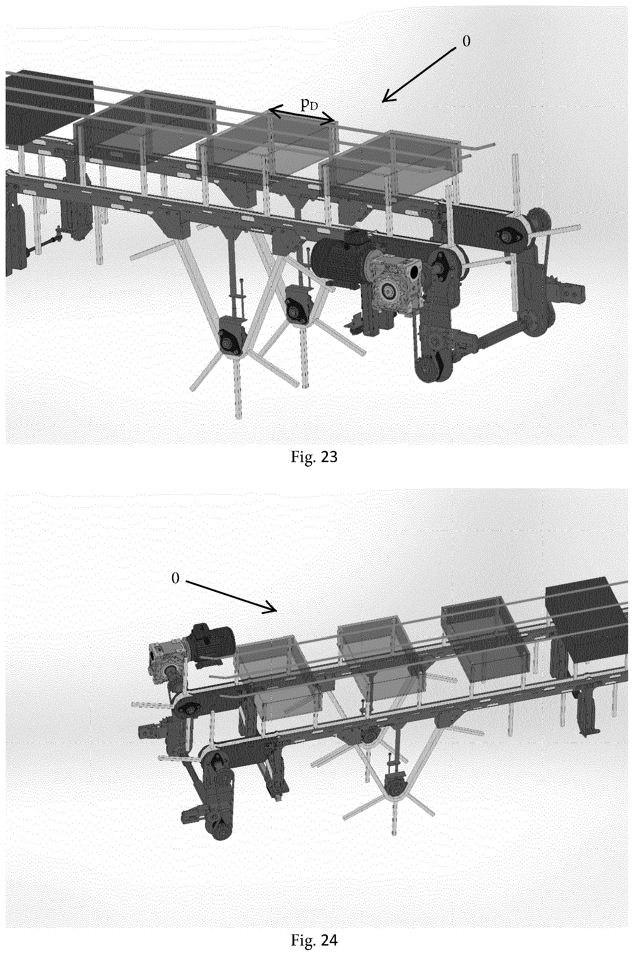

- Fig. 23:: Chain conveyor with stop pins having two parallel chains mounted in a fixator, fitted with low crates, side view
- Fig. 24:: Chain conveyor with stop pins having two parallel chains mounted in a fixator, fitted with low crates, top view

### Examples of the Invention Execution

### Example 1A

### Design of the chain conveyor having the stop pins

A standard nylon conveyor chain 4 with a width of 70 mm, a height of 20 mm and a length of 6,200 mm was made, which was fitted with stop nylon pins 2 with a height of 320 mm, i.e. a free height k_{V} of 300 mm and a thickness of 20 mm, wherein the distance k_{D} of adjacent stop pins 2 on one chain 4 was150 mm.

### Example 1B

### Design of the chain conveyor having the stop pins, in the fixator

A steel C-rail-shaped fixator 6 for the chain conveyor 1 was made according to Example 1A. The rails were made of a steel profile with a cross-section in the shape of a rounded rectangle. The internal dimensions of the steel profile were: width 80 mm and height 25 mm. The profile was 3,000 mm in length. A longitudinal opening was cut into the steel profile extending the entire length of the profile on wider, upper side thereof. This created a cross-section having the shape of the letter C laid on the back thereof. At the end and beginning of the profile, rounded edges were created on the underside of the profile by cutting the profile at the bottom corners and bending the bottom wall of the profile downwards. Into the side walls of the profile, always opposite each other, openings 11 were cut, the dimensions of which followed the dimensions of one link of the conveyor chain 4. These openings 11 will be used for servicing chain 4, where a defective link of chain 4 is unpinned through opening 11, the defective link is removed through opening 11, and the new link is seated in place through opening 11 and pinned.
The rail was provided with a sliding lug on the lower side thereof in the first quarter of the length thereof and in the last quarter of the length thereof, i.e. at the end and at the beginning, opening of which was perpendicular to the travel axis h of the conveyor 1. The sliding lug will be used for mounting the rails on the sliding axis 7 and, thus, for moving the rail.
The chain 4 with the pins 2 fitted according to example 1A was slid into the rail, wherein the pins 2 passed through the upper opening in the rail. The chain 4 was connected in an endless loop and pinned.

### Example 2

### Design of the chain conveyor having the stop pins

Two standard nylon conveyor chains 4 with a width of 100 mm, a height of 30 mm and a length of 6,200 mm were made, which were fitted with stop nylon pins 2 with a height of 320 mm, i.e. a free height kᵥ of 300 mm and a thickness of 20 mm, wherein the distance k_{D} of adjacent stop pins 2 on one chain 4 was150 mm.
Steel fixators 6 of a shape of double C-rail were made for chain conveyor 1. The rails were made of a steel profile with a cross-section in the shape of a rounded rectangle with a transversal. The internal dimensions of the steel profile were: width 110 mm and height 75 mm. The profile was 3,000 mm in length. A longitudinal opening was cut into the steel profile extending the entire length of the profile on the narrower, upper side thereof and on narrower lower side thereof. This created a cross-section of a double C-letter joined by the backs. Into the side walls of the profile, always opposite each other, openings 11 were cut, the dimensions of which followed the dimensions of one link of the conveyor chain 4. These openings 11 will be used for servicing chain 4, where a defective link of chain 4 is unpinned through opening 11, the defective link is removed through opening 11, and the new link is seated in place through opening 11 and pinned.
The first of the two rails was provided with a sliding lug on the lower side thereof in the first third of the rail length and in the last third of the rail length, i.e. at the end and at the beginning, opening of which was perpendicular to the travel axis h of the conveyor 1. The sliding lug will be used to mount the rails on the sliding axis 7 and, thus, to move the rail(s), thereby narrowing or widening the conveyor 1 according to the size of the crates 3 to be washed.
The second of the two rails has been provided with two rail-guiding profiles on the underside thereof, which will be used to mount onto the rail guide and, then, to move the rail in a direction perpendicular to the travel axis h of the conveyor 1, thereby narrowing or widening the conveyor 1 according to the size of the crates 3 to be washed.
The chains 4 with the pins 2 fitted were slid into the rails, wherein the pins 2 passed through the upper opening in the rail. The chains 4 were connected in an endless loop and pinned.

### Example 3A

### Installation of the chain conveyor having high pins into the washing line

The wash zone of washing line 0 with a length of 3,000 mm in the form of a tunnel was equipped with two rail guides placed perpendicular to the travel axis h of the conveyor 1. The height t of the working wash zone from the upper edge of the installed chain conveyor rail according to Example 2 to the upper stop 5 was 350 mm.
The first rail fitted with the chain 4 without guiding profiles according to Example 2 was installed in the wash zone of the washing line 0, parallel to the axis of the washing line, or, more precisely, parallel to the travel axis h of the conveyor 1. The rail was installed to the lower side edge of the working wash zone with a removable joint. The second rail was fitted over the rail-guiding profiles onto the rail guide.
Through the sliding lugs at the end and at the beginning of the first rail, sliding axes 7 were passed, which were fixed on the second rail in a place corresponding to the place of fixing of the sliding lugs, i.e. the axis connecting the fixing of the sliding axis 7 on the second rail and the sliding lug on the first rail is perpendicular to the travel axis h of the conveyor 1. The two sliding axes 7 were connected to a drive 10, i.e. a motor, which represented both the positioning system 8 and the fixing system 9 and allowed the axes 7 to move in a direction perpendicular to the travel axis h of the conveyor 1, thereby allowing the second rail to move away from and towards the first rail, wherein the second rail slid along the rail guide. Thus the distance d of the chains 4, the width of the conveyor in the wash zone of washing line 0, was adjusted.
The two chains 4 were attached to the tensioners of chains 4 under the plane of the conveyor 1 and switched off.
The upper stop (5) was then installed in the ceiling of the wash zone, running the entire length of the wash zone and positioned at a constant height.
The height of the working wash zone defined from the upper wall of the rail to the upper stop 5 is 350 mm.

### Example 3B

### Installation of the chain conveyor having high pins into the washing line

By analogy with Example 3A, the wash zone of the washing line 0 with a length of 3,000 mm in the form of a tunnel was fitted with a chain according to Example 1A, positioned parallel to the travel axis h of the conveyor 1. The height of the working wash zone from the upper edge of the installed chain 4 of the chain conveyor 1 according to Example 1A to the upper stop 5 was 310 mm.

### List of marks for terms

- 0.: Washing line
- 1.: Chain conveyor
- 2.: Stop pin
- 3.: Crate
- 4.: Chain of the chain conveyor 1
- 5.: Upper stop
- 6.: Fixator
- 7.: Sliding axis of the fixator 6
- 8.: Positioning system
- 9.: Fixing system
- 10.: Drive
- 11.: Openings of fixator 6 to handle the chain 4

- d: Distance of the chains 4
- h: Travel axis of the chain conveyor 1
- k_{V}: Free height of stop pins 2
- k_{D}: Distance of adjacent stop pins 2 on one chain 4
- t: Height of the working wash zone
- p_{D}: Inner length of the crate 3
- p_{P}: Is the thickness of the crate 3 base
- p_{S}: Inner width of the crate 3

### Applicability in Industry

Washing lines for crates and boxes, crate fixation, increased washing line efficiency.

## Claims

1. A chain conveyor (1) with stop pins (2) for washing lines (0) of crates (3), **characterized in that** it comprises at least one chain (4) fitted with stop pins (2), wherein a height (k_{V}) of the stop pins (2) ranges *t - 50 mm* - *pₚ < k_{V} < t - pₚ,* where *t* is a height of a working wash zone and *pₚ* is a thickness of a base of the crate (3), wherein the height of the working wash zone is defined as the shortest distance from an upper edge of the chain (4) of the chain conveyor (1) to a horizontal plane passing through a lower edge of an upper stop (5) of the washing line (0), and a distance (k_{D}) of adjacent stop pins (2) seated on one chain (4) ranges *½p_{D} < k_{D} < p_{D},* where *p_{D}* is an inner length of the crate (3).

2. The chain conveyor (1) with stop pins (2) according to claim 1, **characterized in that** the chain (4) is seated in a fixator (6).

3. The chain conveyor (1) with stop pins (2) according to claim 1, **characterized in that** it comprises two parallel chains (4).

4. The chain conveyor (1) with stop pins (2) according to claim 3, **characterized in that** a distance (d) of the two parallel chains (4) is adjustable.

5. The chain conveyor (1) with stop pins (2) according to claim 4, **characterized in that** the distance (d) of the chains (4) is in the range *½p_{S} < d* < *p_{S},* where *p_{S}* is an inner width of the crate (3), wherein the distance (d) of the chains (4) of the chain conveyor (1) is defined as a distance of an outer edges of the stop pins (2).

6. The chain conveyor (1) with stop pins (2) according to claims 2 and 3, **characterized in that** fixers (6) for positioning the chains (4) are linked by a sliding axis (7) perpendicular to a travel axis (h) of the chain conveyor (1).

7. The chain conveyor (1) with stop pins (2) according to claim 6, **characterized in that** the sliding axis (7) is connected to at least one fixator (6) by a sliding joint.

8. The chain conveyor (1) with stop pins (2) according to claim 6, **characterized in that** the sliding axis (7) is connected to a positioning system (8) and a fixing system (9).

9. The chain conveyor (1) with stop pins (2) according to claim 8, **characterized in that** both the positioning system (8) and the fixing system (9) are implemented by a horizontal drive (10).

10. The chain conveyor (1) with stop pins (2) according to claim 9, **characterized in that** the horizontal drive (10) is mechanical, pneumatic, hydraulic, or electromechanical.

11. The chain conveyor (1) with stop pins (2) according to claim 8, **characterized in that** both the positioning system (8) and the fixing system (9) are implemented by a hollow cylinder with inserted piston or
by a motor.

12. The chain conveyor (1) with stop pins (2) according to claim 6, **characterized in that** the sliding axis (7) has a Cardan gearbox.

13. The chain conveyor (1) with stop pins (2) according to claim 2, **characterized in that** the fixator (6) is a C-rail, wherein the chain (4) is housed in the body of the fixator (6) and the stop pins (2) pass through an upper wall of the fixator (6).

14. The chain conveyor (1) with stop pins (2) according to claim 14, **characterized in that** the fixator (6) has openings (11) in both side walls thereof for handling the chain (4).

15. The chain conveyor (1) with stop pins (2) according to claim 1, **characterized in that** the chain (4) and the stop pins (2) are made of stainless steel and/or nylon.
